Europäisches Patentamt

European Patent Office

Office européen des brevets

(11) Veröffentlichungsnummer: **0 503 144 A2**

# EUROPÄISCHE PATENTANMELDUNG

(21) Anmeldenummer: **91120680.3**

(51) Int. Cl.5: **F16M  1/021**

(22) Anmeldetag: **02.12.91**

(30) Priorität: **11.03.91 DE 4107783**

(43) Veröffentlichungstag der Anmeldung:
**16.09.92 Patentblatt  92/38**

(84) Benannte Vertragsstaaten:
**DE ES FR GB IT**

(71) Anmelder: **GOETZE AG**
**Bürgermeister-Schmidt-Strasse 17**
**W-5093 Burscheid 1(DE)**

(72) Erfinder: **Ecker, Rainer, Dipl.-Ing.**
**Huflandstrasse 20**
**W-5090 Leverkusen 3(DE)**

(54) **Gehäuseverschlussdeckel.**

(57) Die Erfindung betrifft einen Gehäuseverschluß-deckel für Kurbelwellengehäuse von Kfz-Motoren mit von unten anflanschbarer Ölwanne. Der aus Blech geformte Verschlußdeckel ist auf der axialen Flanschfläche (10) mit biegesteifen Zusatzblechen (14,16) versehen.

FIG. 2

EP 0 503 144 A2

Die Erfindung betrifft einen Gehäuseverschlußdeckel mit einer im Einbauzustand durch den Deckel sich erstreckenden Welle und mit von unten anflanschbarer Ölwanne, insbesondere Kurbelwellengehäuse von Kfz-Motoren, mit einer dynamischen Lippendichtung für die Welle sowie zwei unter einem Winkel von üblicherweise 90 Grad aufeinandertreffenden, statisch abzudichtenden Flanschflächen, deren eine radial zur dichten Verbindung mit dem Kurbelwellengehäuse und deren andere axial zur dichten Verbindung mit der Ölwanne sich erstreckt, wobei der Deckel aus einem gezogenen Blechkörper gebildet ist.

Die DE-PS 36 34 735 offenbart einen Gehäuseverschlußdeckel der genannten Gattung. Der Gehäuseverschlußdeckel besteht aus einem topfförmig gezogenen Blechkörper, der zur Abdichtung der Kurbelwelle einen dynamisch belasteten Dichtungsring aus elastomerem Werkstoff sowie statisch wirkende Dichtstreifen, ebenfalls aus elastomerem Werkstoff, die einstückig ineinander übergehen, aufweist. Zur Abdichtung der von unten gegen das Kurbelwellengehäuse verschraubbaren Ölwanne dient ein Dichtstreifen, welcher aus der axialen Flanschfläche heraustritt. Im Gehäuseverschlußdeckel sind zwei Muttern eingeschweißt, so daß beim Anschrauben der Ölwanne der genannte Dichtstreifen zwischen Gehäusedeckel und Ölwanne mit ausreichender Flächenpressung zusammengedrückt werden kann, um so eine Dichtheit zu erzeugen.

Üblicherweise ist die Ölwanne gegenüber dem Kurbelwellengehäuse mittels einer statischen Dichtung abgedichtet. Je nach Motorkonstruktion können beispielsweise Papierdichtungen, Korkdichtungen oder hochviskose Dichtmassen zur Anwendung gelangen. Der Gehäuseverschlußdeckel muß in der Ölwannendichtebene zwei Funktionen übernehmen. Da der Dichtstreifen zur Abdichtung der Ölwanne auf der statischen Dichtung (z.B. Papierdichtung) aufliegt, ist die erste Funktion darin zu sehen, eine Abdichtung zwischen Gehäusedeckel und Papierdichtung zu schaffen. Die zweite Funktion besteht darin, einen hohen Anpreßdruck auf die Papierdichtung zu erzeugen, damit während des Betriebs kein Öl unter die Papierdichtung gelangen kann.

Es hat sich gezeigt, daß bei gattungsgemäßen Verschlußdeckeln in der Mitte zwischen den Schrauben auf der axialen Flanschfläche keine ausreichende Flächenpressung zu erzeugen ist, da beim Anziehen der Schrauben der Blechkörper sich deformiert.

Der Erfindung liegt die Aufgabe zugrunde, einen gattungsgemäßen Gehäuseverschlußdeckel dahingehend zu verbessern, daß eine Deformation der axialen Flanschfläche beim Einbau des Deckels vermieden wird.

Diese Aufgabe wird erfindungsgemäß dadurch gelöst, daß die axiale Flanschfläche mit einem den Biegewiderstand vergrößernden Mittel versehen wird. Damit das Gesamtgewicht des Deckels sich nicht wesentlich erhöht ist es vorteilhaft, als Mittel ein biegesteifes Zusatzblech zu verwenden, welches auf der Flanschfläche befestigt ist. Weitere den Biegewiderstand vergrößernde Maßnahmen ergeben sich durch entsprechende Profilierung des Zusatzblechs gemäß der Unteransprüche.

Die Erfindung ist in der Zeichnung dargestellt und wird im folgenden näher erläutert. Es zeigen:

Figur 1 eine Vorderansicht eines Gehäuseverschlußdeckels

Figur 2 Ansicht gemäß II - II

Figur 3 Teil einer Rückansicht eines Gehäuseverschlußdeckels mit modifiziertem Zusatzblech.

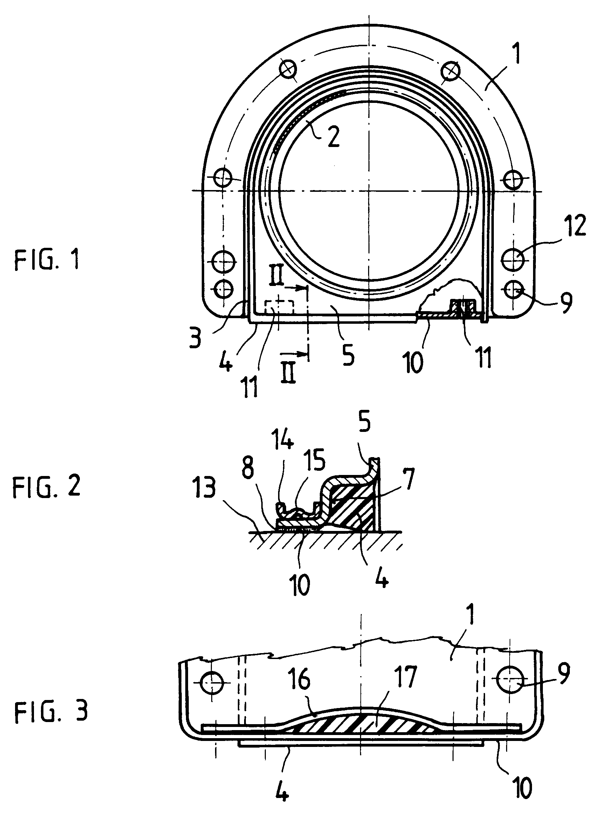

Der in der Figur 1 dargestellte Gehäuseverschlußdeckel dient zur Abdichtung eines Kurbelwellengehäuses eines Kraftfahrzeugmotors mit von unten anflanschbarer Ölwanne. Der Gehäuseverschlußdeckel (1) besteht aus einem topfförmig gezogenen Blechkörper, der zur Abdichtung der im Einbauzustand rotierenden Kurbelwelle (nicht gezeichnet), einem dynamisch belasteten Dichtungsring (2) aus elastomerem Werkstoff sowie aus statisch wirkende Dichtstreifen (3 und 4), ebenfalls aus elastomerem Werkstoff, die einstückig ineinander übergehen, aufweist. Der Dichtstreifen (3) dient zur statischen Abdichtung des Kurbelwellengehäuses (nicht gezeichnet) und der Dichtstreifen (4) zur Abdichtung der Ölwanne (13) (Figur 2). Im Einbauzustand liegt eine radiale Flanschfläche (5) mit dem Dichtstreifen (3) am Kurbelwellengehäuse und wird mit Hilfe von durch Löcher (9) steckbaren Schrauben verspannt. Zur lagegerechten Fixierung können Bohrungen (12) für Zentrierstifte dienen. Eine weitere radiale Flanschfläche (7) (Figur 2), die gegenüber der Flanschfläche (5) axial zurückgesetzt ist, dient zur Aufnahme des Dichtstreifens (4) (Figur 2). Die Ölwanne (13) stützt sich radial an einer axialen Flanschfläche (10) ab, wobei zwischen Ölwanne (13) und Flanschfläche (10) eine Papierdichtung (8) angeordnet ist. Für die Verschraubung der Ölwanne (13) sind im Gehäuseverschlußdeckel (1) zwei Muttern (11) auf der axialen Flanschfläche (10) befestigt. Auf der Flanschfläche (10) sind das Biegemoment vergrößernde Mittel in Form von biegesteifem Zusatzblech (14, 16) angeordnet.

Die Figur 2 zeigt ein U-förmiges Blech (14) mit einer Sicke (15).

In der Figur 3 ist ein gerades Blech (16) abgebildet, welches im mittleren Bereich konvex gekrümmt ist. Der Zwischenraum (17) radial unter dem Blech (16) kann mit einem inkompressiblen Medium gefüllt sein, zum Beispiel Elastomermaterial.

**Patentansprüche**

1. Gehäuseverschlußdeckel mit einer im Einbauzustand durch den Deckel sich erstreckenden Welle und mit von unten anflanschbarer Ölwanne, insbesondere für Kurbelwellengehäuse von Kfz-Motoren, mit einer dynamischen Lippendichtung für die Welle sowie zwei unter einem Winkel von üblicherweise 90 Grad aufeinandertreffenden, statisch abzudichtenden Flanschflächen, deren eine radial zur dichten Verbindung mit dem Kurbelwellengehäuse und deren andere axial zur dichten Verbindung mit der Ölwanne sich erstreckt, wobei der Deckel aus einem gezogenen Blechkörper gebildet ist, dadurch gekennzeichnet, daß die axiale Flanschfläche (10) mit einem den Biegewiderstand vergrößernden Mittel versehen ist.

2. Gehäuseverschlußdeckel nach Anspruch 1, dadurch gekennzeichnet, daß das Mittel (14, 16) ein biegesteifes Zusatzblech ist.

3. Gehäuseverschlußdeckel nach den Ansprüchen 1 und 2, dadurch gekennzeichnet, daß das Zusatzblech (16) im mittleren Bereich konvex gekrümmt ist.

4. Gehäuseverschlußdeckel nach den Ansprüchen 1 bis 3, dadurch gekennzeichnet, daß das Zusatzblech (14) ein L- oder U-förmiges Profil aufweist.

5. Gehäuseverschlußdeckel nach den Ansprüchen 1 bis 4, dadurch gekennzeichnet, daß das Zusatzblech (14, 16) mit einer Sicke (15) versehen ist.

6. Gehäuseverschlußdeckel nach den Ansprüchen 1 bis 5, dadurch gekennzeichnet, daß der Zwischenraum (17) von Deckel (1) und Zusatzblech (14, 16) mit einem inkompressiblen Material gefüllt ist.

FIG. 1

FIG. 2

FIG. 3